# EUROPEAN PATENT APPLICATION

(11) **EP 4 557 699 A1**
(43) Date of publication of application: **21.05.2025**
(21) Application number: 24214276.8
(22) Date of filing: 20.11.2024
(51) Int. Cl.: H04L 65/612, H04L 65/613, H04L 65/75, H04L 65/756

(54) **DYNAMIC DATA-STREAM SELECTION FROM EDGE DEVICES**

(30) Priority: 20.11.2023 US 202318514736
(71) Applicant: Tyco Fire & Security GmbH, 8212 Neuhausen am Rheinfall (CH)
(72) Inventor: DENNIS, Kevin, CH-8212 Neuhausen am Rheinfall (CH); FEE, Paul, CH-8212 Schaffhausen (CH); MCCAMBRIDGE, John, CH-8212 Neuhausen am Rheinfall (CH)
(74) Representative: Wright, Howard Hugh Burnby

(57) **Abstract**

Example implementations include a method, apparatus, and computer-readable medium for apparatus for streaming data from a data store. The client device receives, from a stream management system, a first data stream originating at an edge device and having a first set of properties. The client device transmits to the stream management system, an indication of properties supported by the client device for a requested data stream. The supported properties are different that the first set of properties. The stream management system configures an edge device to provide a first data stream that supports the supported properties as one of a plurality of data streams. The stream management system forwards the requested data stream to the client device. The client device receives the requested data stream having the supported properties from the stream management system and originating at the edge device.

## Description

### FIELD

The present disclosure relates generally to dynamic data-stream selection from edge devices.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In some aspects, the techniques described herein relate to an apparatus for streaming data from a data store, including: one or more memories, individually or in combination, storing computer-executable instructions; and one or more processors, individually or in combination, configured to execute the instructions to cause the apparatus to: receive, from a client device, an indication of properties supported by the client device for a requested data stream; configure an edge device to provide a first data stream that supports the supported properties as one of a plurality of data streams; and forward the requested data stream to the client device.

In some aspects, the techniques described herein relate to a method of streaming data from a data store, including: receiving, from a client device, an indication of properties supported by the client device for a requested data stream; configuring an edge device to provide a first data stream that supports the supported properties as one of a plurality of data streams; and forwarding the requested data stream to the client device.

In some aspects, the techniques described herein relate to a method of receiving a dynamic data stream at a client device, including: receiving, from a stream management system, a first data stream originating at an edge device and having a first set of properties; transmitting, to a stream management system, an indication of properties supported by the client device for a requested data stream, wherein the supported properties are different than properties of the first data stream originating at the edge device; and receiving the requested data stream having the supported properties from the stream management system and originating at the edge device.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
FIG. 1 is a schematic diagram of a video management system and client device, according to some aspects;
FIG. 2 is a block diagram of an example computing device which may implement all or a portion of any component or device in FIG. 1, according to some aspects;
FIG. 3 is a message diagram illustrating example communications between the video management system, an edge device, and the user device;
FIG. 4 is a flowchart of an example method of a video management system for dynamic data-stream selection from edge devices.
FIG. 5 is a flowchart of an example method of a client device for dynamically requesting a data-stream.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known components may be shown in block diagram form in order to avoid obscuring such concepts.

A premises may include one or more edge devices configured to provide one or more data streams to a stream management system. For example, the edge devices may be components of a security system for the premises, and the stream management system may provide storage of the data streams and monitoring and control of the premises. In some implementations, the stream management service provides the data streams to one or more client devices. For example, the client devices may be used for remotely monitoring the premises.

In an aspect, the client devices may not use the data streams with the same properties as provided by the edge devices and stored by the stream management system. For example, a client device may be a monitoring station that displays multiple video streams simultaneously such that the resolution at which each video stream is displayed may be significantly less than a maximum resolution. Transcoding refers to the process of changing the resolution of a data stream. Transcoding may be performed at the stream management system or the client device. Transcoding may use considerable processing time at whichever device performs the transcoding. In some use cases, a device may handle multiple streams and the burden of transcoding may affect the performance of a primary function of the device. For instance, if the stream management system is responsible for transcoding multiple streams at multiple resolutions for multiple devices, the processing load for the transcoding may interfere with the storage functionality of the stream management system. Similarly, if the client device (which may have lower processing ability) is responsible for transcoding of multiple streams, streams may not be displayed correctly or user interactions with the client device may be slowed. Accordingly, there is a need to reduce transcoding in stream management systems.

In an aspect, the present disclosure provides for dynamic selection of data streams by a client device. The stream management system facilitates the dynamic selection by negotiating with an edge device to provide multiple streams including a requested stream having properties indicated by a client device. For example, a client device may request a video stream with supported properties such as resolution used for a monitoring interface where the video stream is displayed along with other video streams. The requested resolution may be lower than a resolution configured by the stream management system for storage of the video stream, which would require transcoding if the stream management system were to provide the originally configured data stream. The stream management system may configure the edge device to provide the requested data stream having the supported properties along with the originally configured data stream. The stream management system may provide the requested data stream to the client device without transcoding or with a reduced transcoding load. The stream management system may store the originally configured data stream and/or the requested data stream. The client device may receive and use the requested data stream without transcoding.

In some implementations, a client device may dynamically change the properties of the requested stream. For example, an interface of the client device may allow a user to select a display of a video stream to view the video stream at a higher resolution. When the client device requests new properties for a data stream, the stream management system may determine whether a stream that can satisfy the new properties is already being received. For instance, the originally configured data stream may have a sufficient resolution and frame rate. In some implementations, the stream management service may provide the originally configured data stream to the client device until the edge device is configured to provide the newly requested stream. Either the stream management service or the client device may transcode the originally configured data stream if needed.

The techniques of the present disclosure reduce the amount of transcoding performed by the stream management system and/or the client device, which improves the performance of those devices. For example, the stream management system may generate fewer recording errors. The client device may provide more consistent display of the streams and/or provide faster or smoother interactions with a user.

Turning now to the figures, example aspects are depicted with reference to one or more components described herein, where components in dashed lines may be optional.

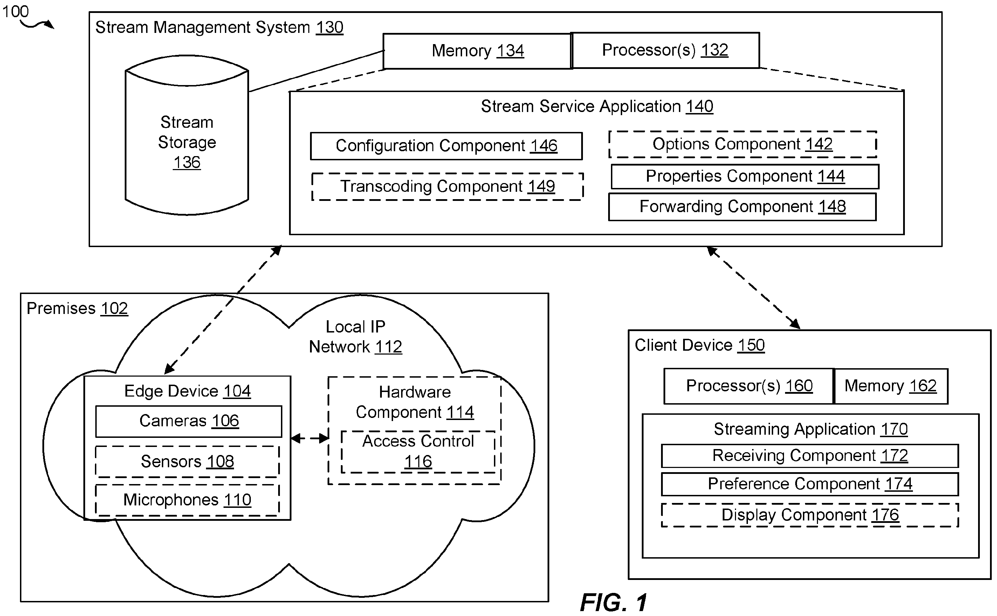

Referring to FIG. 1, in one non-limiting aspect, an environment 100 for data streaming includes a premises 102, a stream management system 130, and a client device 150. For example, the premises 102 includes one or more edge devices 104. An edge device 104 may be any device that generates a data stream. Example edge devices 104 include video cameras 106, microphones 110, and sensors 108. For example, a data stream may be a video stream, an audio stream, or a metadata stream. The edge devices 104 may each be connected to a local IP network 112 and transmit their respective data streams to a stream management system 130 via the local IP network 112. The stream management system 130 is configured to store received streams and provide streams to client devices 150. For example, the stream management system 130 may be implemented on a server or as a cloud service. The client device 150 may be a computing device with a streaming application 170 that utilizes data streams from the stream management system 130. In an example implementation, the stream management system 130 provides a security monitoring system for the premises 102 by providing streams to client devices 150 that act as monitoring stations.

The cameras 106 are capable of providing multiple video streams. In an aspect, the multiple streams may include the same content (e.g., same view from the camera 106). For example, the cameras 106 may provide both a low resolution video stream and a high resolution video stream or video streams with different frame rates. The properties of the video streams may be negotiated with the stream management system 130. For example, the cameras 106 may be limited by a number of streams, a maximum total bandwidth, or other constraints.

In some implementations, the edge devices 104 include sensors 108. For example, sensors 108 may include window sensors, door sensors, glass break sensors, smoke detectors, heat detectors, laser sensors, audio sensors, motion sensors, carbon monoxide detectors, flood sensors and any other sensors that may be deployed at a premises 102. The sensors 108 may, for example, provide a data stream to the stream management system 130 and/or transmit alarms when the sensor 108 detects a configured condition.

In some implementations, the premises 102 may include various hardware components 114. A hardware component 114 may provide input to an edge device 104 or be controlled by an edge device 104. For example, a hardware component 114 may include a door lock. The hardware component 114 may be associated with an access control 116. The edge device 104 may issue commands to the access control 116 to control the hardware component 114 (e.g., unlock a door).

In an aspect, the stream management system 130 is an apparatus for streaming data from a data store. In some implementations, the stream management system 130 may be referred to as a network video recorder (NVR). The stream management system 130 communicates with the edge devices 104. For example, the stream management system 130 receives the data streams transmitted by the edge devices 104. The stream management system 130 may be implemented as a computer server including one or more processors 132 configured to execute instructions stored on one or more memories 134. In some implementations, the stream management system 130 may be implemented on cloud resources distributed over multiple datacenters. In some implementations, the stream management system 130 provides a user interface to allow an operator to interact with the stream management system 130.

In an aspect, the memory 134 of the stream management system 130 includes a stream storage 136 that stores information regarding one or more premises 102. For example, the stream storage 136 may be a database implemented on a computer storage device such as a hard drive or solid state drive that stores the streams according to a native format. The stream storage 136 may implement a retention policy to store the streams for a period of time before deleting the streams to make room for other streams. The retention policy may be defined per stream.

The stream management system 130 includes a stream service application 140. The stream service application 140 communicates with streaming application 170 on the client device 150 to provide requested streams. The stream service application 140 may include an options component 142, a properties component 144, a configuration component 146, a forwarding component 148, and a transcoding component 149.

The options component 142 is configured to provide a client device 150 with a set of available options for properties of a data stream based on capabilities of the edge device 104. For instance, the set of available options may be registered with the stream service application 140 when an edge device 104 is installed at the premises 102 and connected to the stream management system 130. In some implementations, the options component 142 may request an update to the set of available options from the edge device 104.

The properties component 144 is configured to receive, from a client device, an indication of properties supported by the client device for a requested data stream. In some implementation, the indication of properties may be a selection from the set of available options. In some implementations, the indication of properties may be an indication of capabilities of the client device 150.

The configuration component 146 is configured to configure an edge device 104 to provide a first data stream that supports the supported properties as one of a plurality of data streams. For example, the configuration component 146 may communicate with an edge device 104 to request a new data stream in addition to an originally configured data stream. In some implementations, the configuration of the edge device 104 may involve a negotiation. For example, the configuration component 146 may reduce a frame rate or resolution of an existing video stream in order to obtain a second stream while maintaining a maximum bandwidth. In some implementations where the edge device 104 cannot provide the exact requested stream, the stream management system 130 may negotiate for a closest available stream that supports the supported properties.

The forwarding component 148 is configured to forwarding the requested data stream to the client device. In some implementations where the edge device 104 provides the requested data stream, the forwarding component 148 may forward the requested stream from the stream storage 136. In other implementations, the forwarding component 148 may forward packets of a received stream without first storing the stream. In either case, the forwarding component 148 does not need to perform transcoding on the requested data stream because the received stream satisfies the properties requested by the client device 150.

The transcoding component 149 is configured to transcode a data stream in the plurality of data streams from the edge device to match the supported properties. For example, when the stream management system 130 has requested a high resolution video stream for storage, but a client device 150 requests a low resolution version of the video stream, the transcoding component 149 may transcode the high resolution video stream to the lower resolution until a second data stream is provided by the edge device 104. As another example, when the edge device 104 cannot provide the requested data stream, the transcoding component may transcode the first data stream to the requested data stream.

The client device 150 may be a computing device configured to utilize one or more data streams from the stream service application 140. For example, the client device 150 may be a smartphone, a tablet, a desktop computer, a laptop computer, or a virtual or augmented reality headset. In some implementations, the client device 150 is configured to present the one or more data streams to a user. For instance, in one implementation, the client device 150 is a monitoring station that is configured to display a plurality of video streams.

The client device 150 is configured with a streaming application 170 to control communication with the stream management system 130. The streaming application 170 includes a receiving component 172 and a preference component 174. The receiving component 172 is configured to receive, from the stream management system 130, a first data stream originating at an edge device 104 and having a first set of properties. The first data stream may be transcoded from an original data stream from the edge device 104. The preference component 174 is configured to transmit, to the stream management system, an indication of properties supported by the client device for a requested data stream. The receiving component 172 is further configured to receive the requested data stream having the supported properties from the stream management system and originating at the edge device without transcoding after transmitting the indication. The client device 150 may include a display component 176 that is configured to output one or more streams. For example, the display component 176 may include a user interface that concurrently displays two or more video streams at a configured resolution. When the client device 150 receives the requested video stream having the configured resolution, the display component 176 may not need to perform transcoding on the video stream.

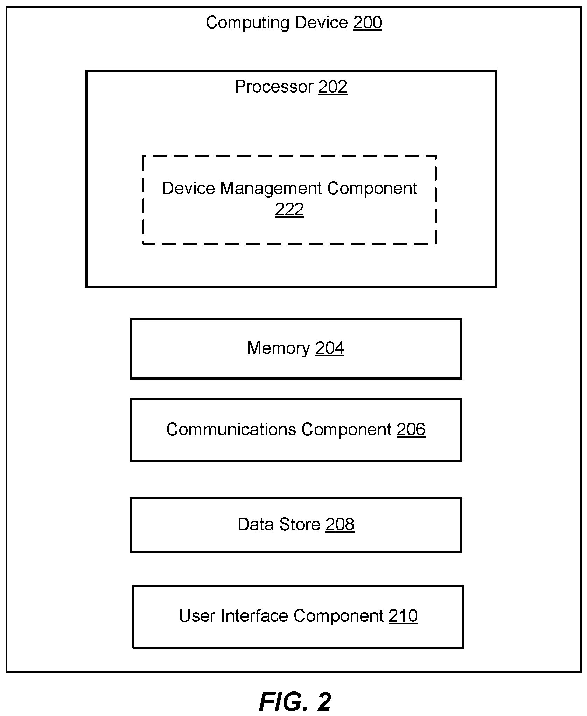

FIG. 2 illustrates an example block diagram providing details of computing components in a computing device 200 that may implement all or a portion of one or more components in a control panel, a cloud system, a security / automation sensor or device, a user device (e.g., a smartphone, a tablet, a laptop computer, a desktop computer, etc.), a dedicated device, or any other component described above. For example, the computing device 200 may implement the edge device 104, the stream management system 130, the client device 150, or a hardware component 114. The computing device 200 includes a processor 202 which may be configured to execute or implement software, hardware, and/or firmware modules that perform any functionality described above with reference to one or more components in a control panel, a cloud system, a security / automation sensor or device, a user device, a dedicated device, or any other component described above. For example, the processor 202 may be configured to execute a device management component 222 to provide device management functionality as described herein with reference to various aspects.

The processor 202 may be a micro-controller and/or may include a single or multiple set of processors or multi-core processors. Moreover, the processor 202 may be implemented as an integrated processing system and/or a distributed processing system. The computing device 200 may further include a memory 204, such as for storing local versions of applications being executed by the processor 202, related instructions, parameters, etc. The memory 204 may include a type of memory usable by a computer, such as random access memory (RAM), read only memory (ROM), tapes, flash drives, magnetic discs, optical discs, volatile memory, non-volatile memory (e.g., a non-transitory computer-readable medium storing instructions executable by the processor 202), and any combination thereof. Additionally, the processor 202 and the memory 204 may include and execute an operating system executing on the processor 202, one or more applications, display drivers, etc., and/or other components of the computing device 200.

Further, the computing device 200 may include a communications component 206 that provides for establishing and maintaining communications with one or more other devices, parties, entities, etc., utilizing hardware, software, and services. The communications component 206 may carry communications between components on the computing device 200, as well as between the computing device 200 and external devices, such as devices located across a communications network and/or devices serially or locally connected to the computing device 200. For example, the communications component 206 may include one or more buses, and may further include transmit chain components and receive chain components associated with a wireless or wired transmitter and receiver, respectively, operable for interfacing with external devices.

Additionally, the computing device 200 may include a data store 208, which can be any suitable combination of hardware and/or software, that provides for mass storage of information, databases, and programs. For example, the data store 208 may be or may include a data repository for applications and/or related parameters not currently being executed by the processor 202. In addition, the data store 208 may be a data repository for an operating system, application, display driver, etc., executing on the processor 202, and/or one or more other components of the computing device 200.

The computing device 200 may also include a user interface component 210 operable to receive inputs from a user of the computing device 200 and further operable to generate outputs for presentation to the user (e.g., via a display interface to a display device). The user interface component 210 may include one or more input devices, including but not limited to a keyboard, a number pad, a mouse, a touch-sensitive display, a navigation key, a function key, a microphone, a voice recognition component, or any other mechanism capable of receiving an input from a user, or any combination thereof. Further, the user interface component 210 may include one or more output devices, including but not limited to a display interface, a speaker, a haptic feedback mechanism, a printer, any other mechanism capable of presenting an output to a user, or any combination thereof.

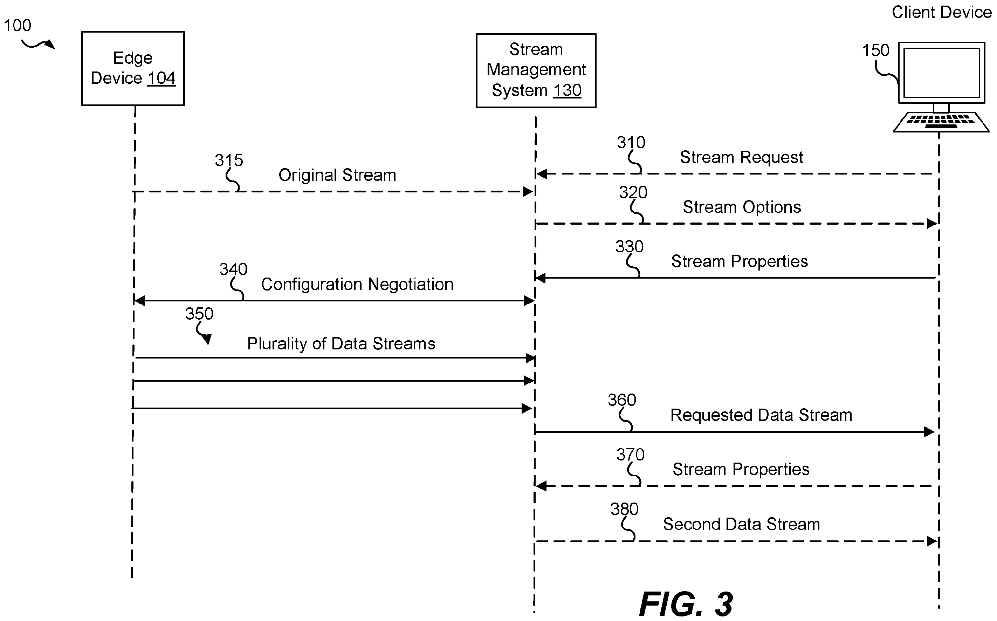

FIG. 3 is a message diagram illustrating example communications between an edge device 104, the stream management system 130, and a client device 150. For example, the edge device 104, the stream management system 130, and the client device 150 may be configured as described above with respect to FIG. 1.

In some implementations, the client device 150 sends an optional stream request 310. The stream request 310 may identify an edge device 104 and/or a stream. For example, the stream request 310 may select a stream from a catalogue provided by the stream management system 130. In some implementations, a user may dynamically request a stream, for example, by browsing the catalogue and selecting a stream. In some implementations, an engineer, technician, or administrator may configure the streaming application 170 with a set of streams, in which no stream request 310 is necessary. In some implementations, the requested stream may be an original stream 315. For instance, the original stream 315 may be configured by the stream management system 130. For instance, in the security scenario, the original stream 315 may be configured based on a storage policy.

The stream management system 130 may optionally send a set of stream options 320. The stream options 320 may indicate available properties for one or more streams or edge devices 104. For example, for a video stream, the stream options 320 may include ranges or choices for properties such as resolution, frame rate, and color quality. Similarly, the stream options 320 for an audio stream may include a range of bit rates. For a metadata stream, the stream options 320 may include available parameters and a range of available reporting rates.

The client device 150 sends requested stream properties 330 to the video management system 130. In some implementations, the requested stream properties 330 include a selection from the stream options 320. Accordingly, the selected stream options may be acceptable to both the client device 150 and the edge device 104. In some implementations, for example where the stream request 310 or stream options 320 are not communicated, the stream properties 330 may be capabilities of the client device 150. For instance, the preference component 174 may indicate desired properties that the client device 150 is capable of handling such as a maximum resolution. Negotiation may be used to resolve any differences between the capabilities of the client device 150 and the capabilities of the edge device 104.

The stream management system 130 and the edge device 104 perform configuration negotiation 340. For example, the stream management system 130 may transmit a request for a new stream based on the stream properties 330. The edge device 104 may respond with an indication that the requested stream can be provided, a proposal for a new stream with different parameters, or a proposal to modify an existing stream. The stream management system 130 may determine whether any proposals are acceptable based on the configuration of the stream management system 130 and the stream properties 330.

In an example negotiation, the stream properties 330 may indicate a stream with a lower resolution than an original stream requested by the stream management system 130. The stream management system 130 may send a request to the edge device 104 with the requested lower resolution and a same frame rate as the original stream. The edge device 104 may, for example, determine that the addition of the requested stream to the original stream would exceed a bandwidth limit. The edge device 104 may propose a new stream with the requested lower resolution and a lower frame rate. Alternatively or additionally, the edge device 104 may propose a modification to the original stream to lower the resolution or frame rate and decrease bandwidth. The edge device 104 may provide multiple options. The stream management system 130 may determine whether a proposed option is acceptable. For example, if the proposed new stream satisfies the stream properties 330, the stream management system 130 may accept the proposed new stream. As another example, if the proposed modification to the original stream satisfies configured recording requirements at the stream management system 130, the stream management system 130 may accept the proposed modification to the original stream in order to obtain the requested stream. If none of the proposed options are acceptable, the stream management system may continue to receive the original stream, which may be transcoded for the client device 150.

Once the edge device 104 and the stream management system 130 have completed the configuration negotiation 340, the edge device 104 may send a plurality of streams 350 to the stream management system 130. For instance, the plurality of streams 350 may include the original stream and the requested stream. In some cases, the plurality of streams 350 may include modified streams.

The stream management system 130 receives the plurality of streams 350. The stream management system 130 may store the original stream or a modified stream that satisfies a recording requirement. The stream management system 130 forwards the requested stream 360 to the client device without transcoding. That is, the requested stream 360 that is received in the plurality of streams 350 satisfies the stream properties 330. Accordingly, the requested stream 360 may be forwarded without transcoding at the stream management system 130 and received at the client device 150 without transcoding by the client device 150.

In some implementations, the client device 150 may request to change the properties of the requested data stream. For example, the client device 150 may transmit stream properties 370, which may be similar to the stream properties 330. For example, the client device 150 may change between a low resolution video stream displayed among other video streams to a high resolution video stream. Such changes may be likely to occur frequently. When the stream management system 130 receives the stream properties 370, the stream management system 130 may provide the second stream 380 of the plurality of streams 350 instead of the requested stream 360. For example, the stream management system 130 may select the second stream 380 that most closely matches the stream properties 370. For instance, the second stream 380 may be a stream previously requested by the client device 150, or a stream requested by another client device. In some implementations, the second stream 380 may be provided without transcoding and without reconfiguring the edge device 104.

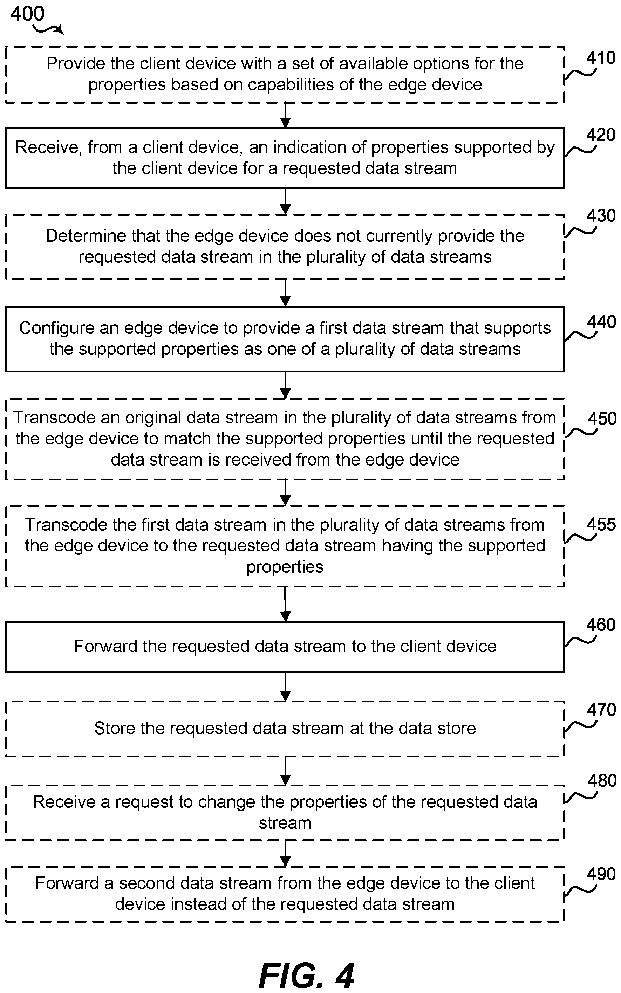

FIG. 4 is a flowchart of an example method 400 for streaming data from a data store. The stream management system 130 may perform the method 400 such as via execution of the stream service application 140 by processor(s) 132 and/or memory 134. For example, the memory 134 may store computer-executable code and the processor 132 may execute the computer-executable code to cause the stream management system 130 to perform the method 400 when executed by the one or more processor(s) 132, individually or in combination. Further, the stream management system 130 may be configured to perform the method 400 in communication with the edge device 104 and the client device 150 as described herein.

At block 410, the method 400 may optionally include providing the client device with a set of available options for the properties based on capabilities of the edge device. For example, in an aspect, stream management system 130, processor 132, and/or memory 134 may execute the stream service application 140 and/or the options component 142 to provide the client device 150 with a set of available options 320 for the properties based on capabilities of the edge device 104. For instance, the set of available options 320 may include properties of streams that the edge device 104 is capable of providing.

At block 420, the method 400 includes receiving, from a client device, an indication of properties supported by the client device for a requested data stream. For example, in an aspect, stream management system 130, processor 132, and/or memory 134 may execute the stream service application 140 and/or the properties component 144 to receive, from the client device 150, an indication of properties 330 supported by the client device for a requested data stream.

At block 430, the method 400 may optionally include determining that the edge device does not currently provide the requested data stream having the supported properties in the plurality of data streams. For example, in an aspect, stream management system 130, processor 132, and/or memory 134 may execute the stream service application 140 and/or the configuration component 146 to determine that the edge device 104 does not currently provide the requested data stream in the plurality of data streams 350.

At block 440, the method 400 includes configuring an edge device to provide a first data stream that supports the supported properties as one of a plurality of data streams. For example, in an aspect, stream management system 130, processor 132, and/or memory 134 may execute the stream service application 140 and/or the configuration component 146 to configure an edge device 104 to provide the first data stream that supports the supported properties as one of a plurality of data streams 350. For instance, in some implementations, the first data stream may be the requested data stream having the supported properties. In some implementations, the first data stream may have properties that allow reduced costs for transcoding the first data stream to the requested data stream. For instance, the first data stream may be the data stream that the edge device 104 is capable of providing with the closest properties to the requested data stream.

At block 450, the method 400 may optionally include transcoding an original data stream in the plurality of data streams from the edge device to match the supported properties until the requested data stream is received from the edge device. For example, in an aspect, stream management system 130, processor 132, and/or memory 134 may execute the stream service application 140 and/or the transcoding component 149 to transcode the original data stream 315 in the plurality of data streams 350 from the edge device to match the supported properties until the first data stream is received from the edge device.

At block 455, the method 400 may optionally include transcoding the first data stream in the plurality of data streams from the edge device to the requested data stream having the supported properties. A cost of transcoding the first data stream may be less than a cost of transcoding another data stream in the plurality of data streams. For example, in an aspect, stream management system 130, processor 132, and/or memory 134 may execute the stream service application 140 and/or the transcoding component 149 to transcode the first data stream in the plurality of data streams from the edge device to the requested data stream having the supported properties. For instance, an edge device 104 such as a 20MP camera may only offer H.265, streaming, but the client device 150 may request a 720x480 H.264 stream and may not support H.265. The stream management system 130 may configure a 720x480 H.265 stream as the first stream. The transcoding component 149 may then transcode the 720x480 H.265 stream to the requested H.264 stream. This type of transcoding spreads the work between the edge device 104 and the stream management system 130. Although transcoding is not eliminated, the complexity and processing load of the transcoding is reduced.

At block 460, the method 400 includes forwarding the requested data stream to the client device. For example, in an aspect, stream management system 130, processor 132, and/or memory 134 may execute the stream service application 140 and/or the forwarding component 148 to forward the requested data stream to the client device 150. In some implementations (e.g., where blocks 450 and 455 are not executed), the forwarding component 148 may forward the first data stream to the client device as the requested data stream without transcoding. When block 455 is executed, the forwarding component 148 may forward the requested data stream as output by the transcoding component 149.

At block 470, the method 400 may optionally include storing the requested data stream at the data store. For example, in an aspect, stream management system 130, processor 132, and/or memory 134 may execute the stream service application 140 and/or the stream storage 136 to store the requested data stream at the data store. In some implementations, the stream storage 136 may store additional data streams at the data store. For instance, the stream storage 136 may store an original data stream (e.g., with properties based on a configured storage policy) or a second data stream 380 (e.g., previously requested by the client device 150). In some implementations, the stream storage 136 may store the requested data stream 360 while forwarding a second data stream 380.

At block 480, the method 400 may optionally include receiving a request to change the properties of the requested data stream. For example, in an aspect, stream management system 130, processor 132, and/or memory 134 may execute the stream service application 140 and/or the properties component 144 to receive a request to change the properties of the requested data stream 360.

At block 490, the method 400 may optionally include forwarding a second data stream from the edge device to the client device instead of the requested data stream. For example, in an aspect, stream management system 130, processor 132, and/or memory 134 may execute the stream service application 140 and/or the forwarding component 148 to forward the second data stream 380 from the edge device 104 to the client device instead of the requested data stream 360.

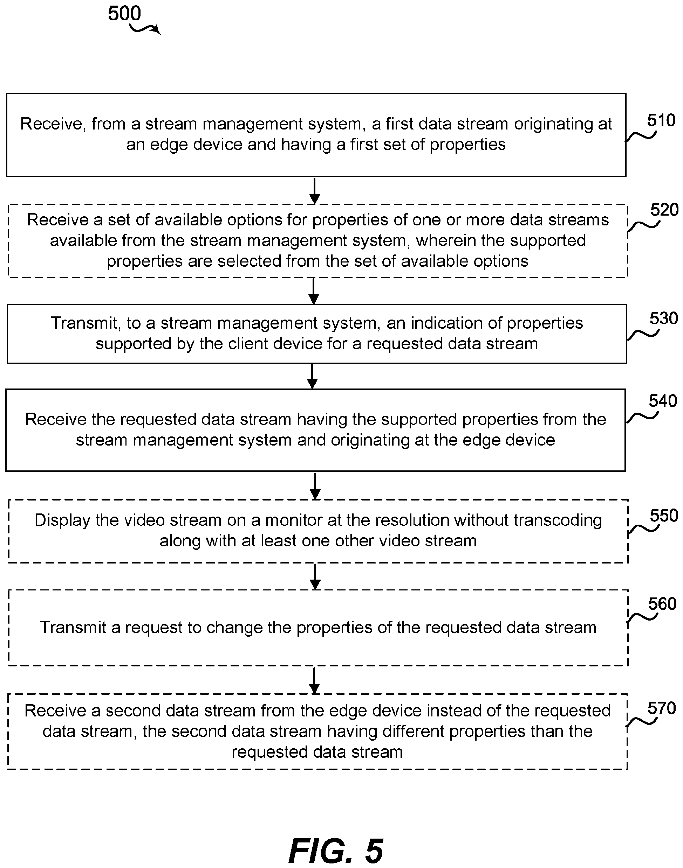

FIG. 5 is a flowchart of an example method 500 for receiving a dynamic data stream at a client device 150. The client device 150 may perform the method 500 such as via execution of the streaming application 170 by processor(s) 160 and/or memory 162. For example, the memory 162 may store computer-executable code and the processor 160 may execute the computer-executable code to cause the client device 150 to perform the method 500 when executed by the one or more processor(s) 160, individually or in combination. Further, the client device 150 may be configured to perform the method 500 in communication with the stream management system 130, as described herein.

At block 510, the method 500 includes receiving, from a stream management system, a first data stream originating at an edge device and having a first set of properties. For example, in an aspect, client device 150, processor 160, and/or memory 162 may execute the streaming application 170 and/or the receiving component 172 to receive, from the stream management system 130, a first data stream originating at an edge device and having a first set of properties. For example, the first data stream may be an original data stream 315 configured based on a storage policy of the stream management system 130.

At block 520, the method 500 may optionally include receiving a set of available options for properties of one or more data streams available from the edge device 104, wherein the supported properties are selected from the set of available options. For example, in an aspect, client device 150, processor 160, and/or memory 162 may execute the streaming application 170 and/or the preference component 174 to receive a set of available options for properties of one or more data streams available from the edge device 104. The preference component 174 may select supported properties from the set of available options.

At block 530, the method 500 includes transmitting, to a stream management system, an indication of properties supported by the client device for a requested data stream. The supported properties are different than properties of the first data stream originating at the edge device. For example, in an aspect, client device 150, processor 160, and/or memory 162 may execute the streaming application 170 and/or the preference component 174 to transmit, to a stream management system, an indication of properties supported by the client device for a requested data stream.

At block 540, the method 500 includes receiving the requested data stream having the supported properties from the stream management system and originating at the edge device. For example, in an aspect, client device 150, processor 160, and/or memory 162 may execute the streaming application 170 and/or the preference component 174 to receive the requested data stream 360 having the supported properties from the stream management system 130 and originating at the edge device 104.

At block 550, the method 500 may optionally include displaying a video stream on a monitor at the resolution without transcoding along with at least one other video stream. For example, in an aspect, client device 150, processor 160, and/or memory 162 may execute the streaming application 170 and/or the display component 176 to display the video stream on a monitor at the resolution without transcoding along with at least one other video stream. The video stream may be the requested stream 360. The at least one other video stream may be received from the stream management system 130 or another source. The display component 176 is configured to display at least two video streams. Because the requested stream 360 has the desired properties, decoding/rendering load on the display component 176 would be lower.

At block 560, the method 500 may optionally include transmitting a request to change the properties of the requested data stream. For example, in an aspect, client device 150, processor 160, and/or memory 162 may execute the streaming application 170 and/or the preference component 174 to transmit a request to change the properties of the requested data stream.

At block 570, the method 500 may optionally include receiving a second data stream from the edge device instead of the requested data stream, the second data stream having different properties than the requested data stream. For example, in an aspect, client device 150, processor 160, and/or memory 162 may execute the streaming application 170 and/or the receiving component 172 to receive a second data stream from the edge device instead of the requested data stream, the second data stream having different properties than the requested data stream.

Some further example aspects are provided below.

Clause 1. An apparatus for streaming data from a data store, comprising: one or more memories, individually or in combination, storing computer-executable instructions; and one or more processors, individually or in combination, configured to execute the instructions to cause the apparatus to: receive, from a client device, an indication of properties supported by the client device for a requested data stream; configure an edge device to provide a first data stream that supports the supported properties as one of a plurality of data streams; and forward the requested data stream to the client device.

Clause 2. The apparatus of clause 1, wherein the one or more processors, individually or in combination, are configured to provide the client device with a set of available options for the properties based on capabilities of the edge device.

Clause 3. The apparatus of clause 1 or 2, wherein the one or more processors, individually or in combination, are configured to configure the edge device to provide the first data stream that supports the supported properties in response to determining that the edge device does not currently provide the requested data stream in the plurality of data streams.

Clause 4. The apparatus of any of clauses 1-3, wherein the one or more processors, individually or in combination, are configured to transcode an original data stream in the plurality of data streams from the edge device to match the supported properties until the first data stream is received from the edge device.

Clause 5. The apparatus of any of clauses 1-4, wherein the one or more processors, individually or in combination, are configured to transcode the first data stream in the plurality of data streams from the edge device to the requested data stream having the supported properties, wherein a cost of transcoding the first data stream is less than a cost of transcoding another data stream in the plurality of data streams.

Clause 6. The apparatus of any of clauses 1-3, wherein the one or more processors, individually or in combination, are configured to forward the first data stream to the client device as the requested data stream without transcoding.

Clause 7. The apparatus of any of clauses 1-6 wherein the requested data stream is a video stream and the properties include one or more of: a resolution; a bit rate, a frame rate, a codec, a codec profile, or a codec property.

Clause 8. The apparatus of any of clauses 1-6, wherein the requested data stream is an audio stream and the properties include a range of bit rates.

Clause 9. The apparatus of any of clauses 1-6, wherein the requested data stream is a metadata stream and the properties include available parameters and a range of available reporting rates.

Clause 10. The apparatus of any of clauses 1-9, further comprising a data storage device configured to store the requested data stream at the data store.

Clause 11. The apparatus of any of clauses 1-10, wherein each of the plurality of data streams include a same content having different properties.

Clause 12. The apparatus of any of clauses 1-11, wherein the one or more processors, individually or in combination, are configured to: receive a request to change the properties of the requested data stream; and forward a second data stream from the edge device to the client device instead of the requested data stream.

Clause 13. The apparatus of clause 12, wherein the one or more processors, individually or in combination, are configured to store the requested data stream while forwarding the second data stream to the client device.

Clause 14. A method of streaming data from a data store, comprising: receiving, from a client device, an indication of properties supported by the client device for a requested data stream; configuring an edge device to provide a first data stream that supports the supported properties as one of a plurality of data streams; and forwarding the requested data stream to the client device.

Clause 15. The method of clause 14, further comprising providing the client device with a set of available options for the properties based on capabilities of the edge device.

Clause 16. The method of clause 14 or 15, wherein configuring the edge device to provide the first data stream that supports the supported properties is in response to determining that the edge device does not currently provide the requested data stream in the plurality of data streams.

Clause 17. The method of any of clauses 14-16, further comprising transcoding an original data stream in the plurality of data streams from the edge device to match the supported properties until the requested data stream is received from the edge device.

Clause 18. The method of any of clauses 14-17, further comprising transcoding the first data stream in the plurality of data streams from the edge device to the requested data stream having the supported properties, wherein a cost of transcoding the first data stream is less than a cost of transcoding another data stream in the plurality of data streams.

Clause 19. The method of clause 14 or 15, wherein forwarding the requested data stream to the client device comprises forwarding the first data stream to the client device as the requested data stream without transcoding.

Clause 20. The method of any of clauses 14-19 wherein the requested data stream is a video stream and the properties include one or more of: a resolution; a bit rate, a frame rate, a codec, a codec profile, or a codec property.

Clause 21. The method of any of clauses 14-19, wherein the requested data stream is an audio stream and the properties include a range of bit rates.

Clause 22. The method of any of clauses 14-19, wherein the requested data stream is a metadata stream and the properties include available parameters and a range of available reporting rates.

Clause 23. The method of any of clauses 14-22, further comprising storing the requested data stream at the data store.

Clause 24. The method of any of clauses 14-23, wherein each of the plurality of data streams include a same content having different properties.

Clause 25. The method of any of clauses 14-24, further comprising: receiving a request to change the properties of the requested data stream; and forwarding a second data stream from the edge device to the client device instead of the requested data stream.

Clause 26. The method of clause 25, further comprising storing the requested data stream while forwarding the second data stream to the client device.

Clause 27. A method of receiving a dynamic data stream at a client device, comprising: receiving, from a stream management system, a first data stream originating at an edge device and having a first set of properties; transmitting, to a stream management system, an indication of properties supported by the client device for a requested data stream, wherein the supported properties are different than properties of the first data stream originating at the edge device; and receiving the requested data stream having the supported properties from the stream management system and originating at the edge device.

Clause 28. The method of clause 27, further comprising receiving a set of available options for properties of one or more data streams available from the edge device, wherein the supported properties are selected from the set of available options.

Clause 29. The method of clause 27 or 28 wherein the requested data stream is a video stream and the properties include one or more of: a resolution; a bit rate, a frame rate, a codec, a codec profile, or a codec property.

Clause 30. The method of clause 29, further comprising displaying the video stream on a monitor at the resolution without transcoding along with at least one other video stream.

Clause 31. The method of clause 27 or 28, wherein the requested data stream is an audio stream and the properties include a range of bit rates.

Clause 32. The method of clause 27 or 28, wherein the requested data stream is a metadata stream and the properties include available parameters and a range of available reporting rates.

Clause 33. The method of any of clauses 27-32, wherein the requested data stream is a version of an original data stream recorded at the stream management system, the requested data stream having different properties than the original data stream.

Clause 34. The method of any of clauses 27-33, further comprising: transmitting a request to change the properties of the requested data stream; and receiving a second data stream from the edge device instead of the requested data stream, the second data stream having different properties than the requested data stream.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

## Claims

1. An apparatus for streaming data from a data store, comprising:
one or more memories, individually or in combination, storing computer-executable instructions; and
one or more processors, individually or in combination, configured to execute the instructions to cause the apparatus to:
receive, from a client device, an indication of properties supported by the client device for a requested data stream;
configure an edge device to provide a first data stream that supports the supported properties as one of a plurality of data streams; and
forward the requested data stream to the client device.

2. The apparatus of claim 1, wherein the one or more processors, individually or in combination, are configured to provide the client device with a set of available options for the properties based on capabilities of the edge device.

3. The apparatus of claim 1 or 2, wherein the one or more processors, individually or in combination, are configured to configure the edge device to provide the first data stream that supports the supported properties in response to determining that the edge device does not currently provide the requested data stream in the plurality of data streams.

4. The apparatus of any one of the preceding claims, wherein the one or more processors, individually or in combination, are configured to transcode an original data stream in the plurality of data streams from the edge device to match the supported properties until the first data stream is received from the edge device.

5. The apparatus of any one of claims 1 to 3, wherein the one or more processors, individually or in combination, are configured to transcode the first data stream in the plurality of data streams from the edge device to the requested data stream having the supported properties, wherein a cost of transcoding the first data stream is less than a cost of transcoding another data stream in the plurality of data streams.

6. The apparatus of any one of the preceding claims, wherein the one or more processors, individually or in combination, are configured to forward the first data stream to the client device as the requested data stream without transcoding.

7. The apparatus of any one of the preceding claims wherein the requested data stream is a video stream and the properties include one or more of: a resolution; a bit rate, a frame rate, a codec, a codec profile, or a codec property.

8. The apparatus of any one of claims 1 to 6, wherein the requested data stream is an audio stream and the properties include a range of bit rates.

9. The apparatus of any one of claims 1 to 6, wherein the requested data stream is a metadata stream and the properties include available parameters and a range of available reporting rates.

10. The apparatus of any one of the preceding claims, further comprising a data storage device configured to store the requested data stream at the data store.

11. The apparatus of any one of the preceding claims, wherein each of the plurality of data streams include a same content having different properties.

12. The apparatus of any one of the preceding claims, wherein the one or more processors, individually or in combination, are configured to:
receive a request to change the properties of the requested data stream; and
forward a second data stream from the edge device to the client device instead of the requested data stream.

13. The apparatus of claim 12, wherein the one or more processors, individually or in combination, are configured to store the requested data stream while forwarding the second data stream to the client device.

14. A method of streaming data from a data store, comprising the operations performed by the apparatus of any of claims 1-13.

15. A method of receiving a dynamic data stream at a client device, comprising:
receiving, from a stream management system, a first data stream originating at an edge device and having a first set of properties;
transmitting, to a stream management system, an indication of properties supported by the client device for a requested data stream, wherein the supported properties are different than properties of the first data stream originating at the edge device; and
receiving the requested data stream having the supported properties from the stream management system and originating at the edge device.
